# FASCICULE DE BREVET EUROPEEN

(11) **EP 3 160 912 B1**
(45) Date de publication et mention de la délivrance du brevet: **12.07.2023**
(21) Numéro de dépôt: 15751077.7
(22) Date de dépôt: 30.06.2015
(51) Int. Cl.: C02F 9/00, C02F 1/52, C02F 1/42, C02F 1/66, C02F 101/20, C02F 1/00, C02F 101/10

(54) **PROCÉDÉ DE TRAITEMENT DES EAUX CHARGÉES EN SELS**
VERFAHREN ZUR BEHANDLUNG VON SALZIGEM WASSER
METHOD FOR TREATING SALTY WATER

(30) Priorité: 30.06.2014 FR 1456150
(43) Date de publication de la demande: 03.05.2017
(73) Titulaire: SUEZ Groupe, 92040 Paris la Défense Cedex (FR)
(72) Inventeur: VANDERGHOTE, Guy, 59700 Marcq en Baroeul (FR); BAUDIN, Isabelle, 92000 Nanterre (FR); BRUGIONI, Maïté, 75018 Paris (FR); LEVEQUE, Jocelyn, 1201 Genève (CH)
(74) Mandataire: Santarelli
(86) Numéro de dépôt international: PCT/IB2015/054908
(87) Numéro de publication internationale: WO 2016/001838

(56) Documents cités:
- EP-A1- 0 341 792

## Description

La présente invention a pour objet un nouveau procédé de traitement d'effluents liquides chargés en métaux, notamment des eaux chargées en sels.

À l'échelle mondiale, le traitement des eaux usées constitue le premier enjeu de santé publique.

Les eaux usées sont toutes les eaux chargées de différents éléments provenant de la population mais aussi des activités commerciales et industrielles et qui sont de nature à polluer les milieux dans lesquelles elles seront déversées. C'est pourquoi, dans un souci de respect de ces différents milieux, des traitements sont réalisés sur ces effluents avant rejet au milieu naturel ou dans un réseau d'assainissement.

Parmi les éléments qu'il faut traiter, on trouve les métaux lourds comme le zinc, le nickel, le chrome, le cuivre, le thallium, l'arsenic, le plomb, le mercure et le cadmium qui sont d'importants contaminants des écosystèmes et du réseau trophique.

De nombreuses solutions ont été apportées pour traiter les métaux lourds, sous forme de différentes méthodes comme par exemple EP0341792 qui divulgue divulgue un procédé de traitement de métaux lourds (Fe, Cr, Ni) comprenant la précipitation par un agent neutralisant, qui toutes présentent des inconvénients :
- les procédés physico-chimiques induisent, lorsqu'on souhaite atteindre des performances techniques élevées, des dépenses d'exploitation (OPEX) importantes liées au coût des réactifs. Par ailleurs ces procédés font appel à des produits chimiques soufrés, comme par exemple le sulfure de sodium (Na₂S) ou le tri-mercaptan qui ont un impact négatif sur l'environnement et ne sont pas performants en cas de pics de concentration,
- les procédés d'échange ionique qui mettent en oeuvre des résines chélatantes permettant la fixation sélective des métaux lourds induisent également des dépenses d'exploitation (OPEX) importantes liées au coût de régénération des résines ou à celui de leur renouvellement, ce coût étant notoirement élevé dans le cas de traitement des effluents chargés en métaux. En outre il est indispensable de gérer les résines usagées qui sont considérées comme des déchets solides dangereux et de gérer les éluats qui sont eux considérés comme des liquides dangereux,
- les techniques membranaires qui mettent en oeuvre des membranes d'ultrafiltration, de nanofiltration ou d'osmose inverse qui induisent des dépenses d'exploitation (OPEX) importantes car le taux de conversion est souvent inférieur à 50 % pour des effluents chargés en sels (gestion et élimination des concentrâts). Par ailleurs ces techniques s'avèrent inutilisables à cause du colmatage rapide et irréversible, lorsque les eaux sont très chargées en sels, notamment en calcium et en sulfate et,
- les techniques d'évapo-concentration ou d'évapo-cristallisation induisent des dépenses d'exploitation (OPEX) importantes du fait de l'énergie nécessaire à l'évaporation et des dépenses d'investissement de capital (CAPEX) élevées. En outre, il y a nécessité de gérer les saumures soit en les éliminant, soit en les valorisant.

Aussi, il existe un besoin de disposer d'une technique permettant à la fois l'optimisation des OPEX, notamment en diminuant les quantités de réactifs utilisés et celle de la performance technique, en particulier : limitation/suppression des rejets de substances dangereuses (mercure, cadmium, plomb, zinc, etc.), meilleur rendement d'épuration, niveaux d'émission de métaux plus faibles, voire nuis, maîtrise des pics d'émission sans surdosage de produit chimique.

Or les inventeurs se sont rendus compte qu'en couplant deux méthodes, une méthode physico-chimique et une méthode par échange d'ions, il était possible de mettre à disposition un procédé de traitement des métaux sur des effluents chargés en sels qui résout l'ensemble des problèmes énoncés précédemment.

Ainsi la présente invention a pour objet un procédé de traitement des métaux lourds présents dans des effluents liquides, chargés en sels, notamment des eaux chargées en sels, ledit procédé comprenant les étapes selon la revendication 1.

On entend par exempt de métaux lourds un liquide dont la concentration en métaux lourds est conforme aux valeurs d'émission en milieu naturel, soit inférieure à 0,01 mg/l.

Conformément à l'invention, l'étape a) peut être réalisée selon toute technique connue de l'homme du métier, notamment par mélange de la chaux éteinte sous forme de lait de chaux avec l'effluent à traiter. Le pH est ajusté par tout acide connu, notamment de l'acide chlorhydrique à 33 % dans une plage de 5,5 à 8,5.

Conformément à l'invention, l'étape de coagulation b) doit être réalisée par addition d'un coagulant. Cette étape peut être réalisée séparément de l'étape a) ou simultanément à l'étape a). Dans les deux modes de réalisation, le mélange coagulé est soumis à une étape de floculation d).

L'étape de précipitation c) est facultative, c'est à dire que l'étape d) peut se faire directement après l'étape b).

A la fin de l'étape d), le floc est éliminé, par exemple par décantation (étape e), selon des techniques connues de l'homme du métier et le liquide décanté est filtré, par exemple sur filtre à sable (étape f) avant d'être mis en contact avec des résines échangeuses d'ions (étape g).

Les étapes de coagulation et de floculation sont réalisées par des techniques connues de l'homme du métier telles celles décrites dans le Mémento Technique de l'eau Dixième édition Tome 1 Chapitre 3 page 185 et suivantes Editeur Degrémont Suez). La coagulation consiste en l'ajout d'un coagulant comme par exemple des cations trivalents, notamment des sels de fer ou d'aluminium, permettant la déstabilisation des particules colloïdales présentes dans l'eau et la neutralisation de toutes les charges électronégatives de ces particules. Au cours de cette étape, les particules neutralisées commencent à s'agglomérer par agitation mécanique pour former des micro-flocs. Ces micro-flocs sont trop petits pour être éliminés, notamment par décantation. Aussi l'étape de floculation est nécessaire pour faire grossir ces flocs.

Conformément à l'invention, le liquide décanté (étape e) et filtré (étape f) peut être mis en contact avec une seule résine apte à capter plusieurs métaux lourds ou sur une batterie de résines chacune étant capable de fixer un ou plusieurs métaux lourds. A titre d'exemple de résine, on peut citer lanxess monoplus TP207, Amberlite IRC 748, lanxess monoplus TP 214, Ambersep GT 74.

A la fin de l'étape g), on récupère le liquide exempt de métaux lourds qui peut donc être rejeté dans le milieu naturel ou dans un réseau d'assainissement.

Le procédé selon l'invention, de par le traitement physico-chimique, permet en outre de diminuer les concentrations en fluor jusqu'à des valeurs répondant aux valeurs limites d'émission en milieu naturel, la valeur limite d'émission en milieu naturel en France est de 15 mg/l, voire inférieures au seuil de détection.

Conformément à l'invention, le procédé permet le traitement des métaux lourds comme le zinc, le nickel, le chrome, le cuivre, le thallium, l'arsenic, le plomb, le mercure et le cadmium qui sont présents dans l'eau par précipitation (par l'agent neutralisation ou l'insolubilisant) et adsorption sur résine. Conformément à l'invention, il est possible d'éliminer un ou plusieurs de ces métaux en fonction du type de résine mise en oeuvre. L'homme du métier à la lumière de ces connaissances générales saura choisir et combiner le type de résine adéquat.

Le procédé selon l'invention s'applique à tout milieu liquide, en particulier tout effluent aqueux, en particulier les effluents de lavage des fumées issues d'installation d'incinération de déchets non dangereux ou de déchets dangereux, les lixiviats d'installation de stockage de déchets non dangereux, d'effluents issus du traitement de surface, d'effluents miniers, de centrales à charbon ou au gaz.

Le procédé de traitement selon l'invention permet d'obtenir, à la fin du procédé, une concentration en chacun des métaux lourds inférieure à 0,01 mg/l.

Conformément à l'invention, le procédé peut comprendre en outre, après l'étape g), au moins une étape d'élution des résines pour désorber les métaux lourds fixés sur lesdites résines, la récupération des éluats contenant lesdits métaux lourds et au moins une étape de régénération desdites résines pour leur utilisation ultérieure dans un nouveau cycle. Les résines utilisées pour adsorber le mercure ne sont pas régénérables du fait de la complexité de la méthode de régénération. Ces résines comme les résines usagées (résine ayant une efficacité réduite après plusieurs cycles de productions/régénérations) sont éliminées de manière classique.

Les éluats de régénération des résines comprenant des concentrations élevées en métaux lourds peuvent être soumis à un traitement physico-chimique (recyclage en amont du procédé). En effet, les résines sont un traitement d'affinage (traitement secondaire) et le physico-chimique est un traitement primaire adapté au traitement d'effluents concentrés en métaux.

Conformément à l'invention, les niveaux d'émissions peuvent être contrôlés par un outil de suivi en ligne et en continu de la teneur des métaux à l'entrée et à la sortie du traitement sur résine échangeuse d'ions ; en fonction de la fuite de métaux, il sera possible de connaître avec précision l'état de saturation de la résine et de déclencher si nécessaire la régénération des résines.

Toujours selon l'invention, l'exploitation peut être optimisée par la mise en place d'un pilotage du procédé afin de garantir les niveaux d'émissions (qualité de l'eau traitée) tout en optimisant/limitant les régénérations des résines (et donc les OPEX de ce poste) :
- récupération et traitement des données des analyseurs puis calcul prédictif des cycles restant pour satisfaire la qualité d'eau souhaitée.
- affichage du décompte en temps réel du cycle restant afin de faire une régénération uniquement lorsque les fuites de métaux sur les résines ne satisfont pas la qualité d'eau souhaitée.

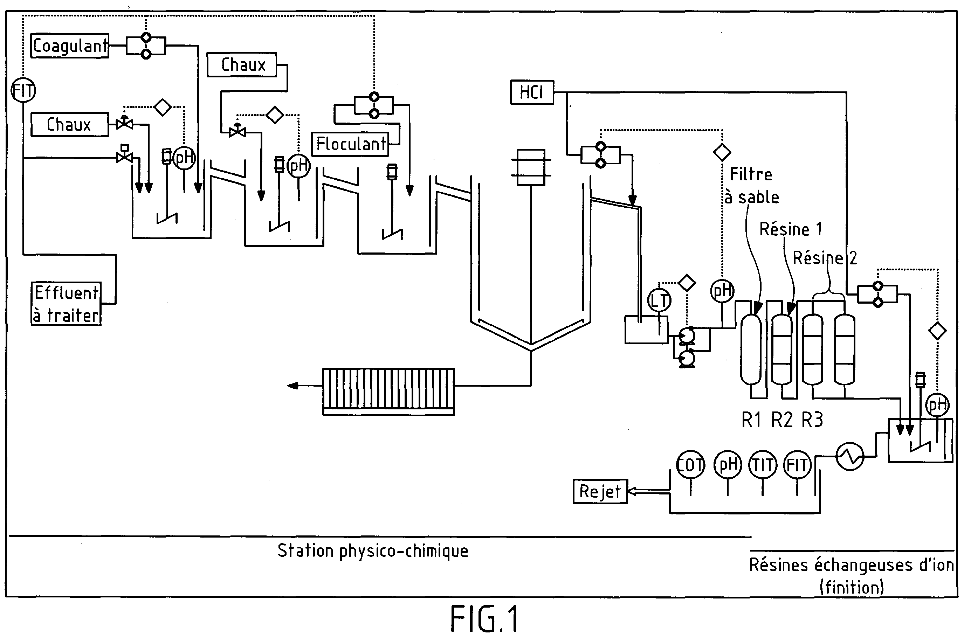

Afin de mieux faire comprendre le procédé objet de la présente invention, on en décrit ci-après un mode de mise en oeuvre. Il demeure bien entendu qu'il ne s'agit là que d'un exemple n'ayant aucun caractère limitatif. Au cours de cette description, on se réfère à la figure 1 des dessins annexés qui est un schéma illustrant les différentes étapes du procédé selon l'invention.

Sur cette figure, l'effluent à traiter est dirigé vers une cuve (1) munie d'un agitateur dans laquelle on ajoute également de la chaux et du coagulant tout en contrôlant le pH ; l'effluent ainsi traité est amené dans une cuve (2) et de nouveau traité à la chaux, sous pH contrôlé puis le mélange est amené de la cuve (2) dans une cuve (3) dans laquelle on ajoute un floculant. Après floculation, le mélange floculé est amené de la cuve (3) dans un décanteur lamellaire (4) et le floc est éliminé. Le liquide décanté et filtré sur un filtre à sable (R1) est ensuite soumis à un passage sur différentes résines (R2 = résine 1 et R3 = résine 2), chacune de ces résines étant aptes à adsorber un ou plusieurs métaux lourds que l'on souhaite éliminer de l'effluent à traiter. Après passage sur ces résines, le liquide exempt de métaux lourd est rejeté dans le milieu naturel ou dans un réseau d'assainissement.

Les performances du procédé selon l'invention comparées à celles des procédés connus de l'état antérieur de la technique sont rassemblées dans le tableau 1 ci-dessous.

**Tableau 1**

| METAL | Concentration initiale dans l'effluent (mg/l) | Concentration finale suite à traitement physico-chimique seul (mg/l) | Concentration finale suite à traitement selon l'invention (mg/l) |
|---|---|---|---|
| Zinc et ses composés | 5 - 150 | 0,01 - 1,3 (4,5) | < 0,01 |
| Nickel et ses composés | 0,5 - 1 | 0,01 - 0,3 (0,3) | < 0,01 |
| Chrome et ses composés | 0,5 - 2 | 0,01 - 0,1 (0,1) | 0,005 - 0,05 |
| Cuivre et ses composés | 1 - 10 | 0,01 - 0,4 (0,4) | < 0,005 |
| Thallium et ses composés | 0,05 - 0,1 | 0,01 - 0,05 (0,05) | 0,01 - 0,05 |
| Arsenic et ses composés | 0,5 - 1 | 0,01 - 0,05 (0,05) | 0,005 - 0,05 |
| Plomb et ses composés | 1 - 50 | 0,01 - 0,15 (1,25) | < 0,005 |
| Mercure et ses composés | 0,5 - 5 | 0,001 - 0,04 (1,1) | < 0,0001 |
| Cadmium et ses composés | 0,5 - 5 | 0,01 - 0,03 (0,2) | 0,001 - 0,01 |
| Fluor et ses composés | 20-60 | 5-15 | 5-15 |

Le procédé selon l'invention présente les avantages suivants :
- un gain OPEX de 25 à 30 % par rapport à la filière physico-chimique seule,
- un gain environnemental du fait de la diminution voire de la suppression des produits soufrés classiquement utilisés pour la précipitation des métaux et
- un gain technique lié au meilleur abattement des métaux.

## Revendications

1. Procédé de traitement de métaux lourds présents dans des effluents liquides chargés en métaux, notamment des eaux chargées en sels, ledit procédé comprenant les étapes suivantes :
a. traitement de l'effluent liquide susceptible de contenir des métaux lourds par un agent neutralisant choisi dans le groupe comprenant notamment la soude, le lait de chaux, le lait de magnésie, à un pH de 5 à 6,
b. coagulation de l'effluent traité à l'étape a) par ajout d'un coagulant,
c. optionnellement,précipitation du mélange obtenu à l'étape b) par un agent neutralisant choisi dans le groupe comprenant notamment la soude, le lait de chaux, le lait de magnésie, à un pH de 9 à 10,
d. floculation, par ajout d'un floculant, du mélange obtenu lors de l'étape de coagulation b) ou du mélange obtenu lors de l'étape de traitement par un agent neutralisant c),
e. élimination des flocs formés à l'étape d) et récupération du liquide,
f. traitement des matières en suspensions résiduelles à l'étape e) par filtration,
g. mise en contact du liquide récupéré à l'étape f) avec une résine échangeuse d'ions apte à adsorber un ou plusieurs métaux lourds ou mises en contact successives avec plusieurs résines échangeuses d'ions, chaque résine étant apte à adsorber un ou plusieurs métaux lourds, afin de réduire la concentration en métaux lourds présents dans ledit liquide,
h. récupération du liquide obtenu lors de l'étape g), la concentration en chacun des métaux lourds à la fin du procédé dans le liquide obtenu lors de l'étape g) étant inférieure à 0,01 mg/l.

2. Procédé de traitement selon la revendication 1, **caractérisé en ce que** les métaux lourds sont choisis dans le groupe comprenant le zinc, le nickel, le chrome, le cuivre, le thallium, l'arsenic, le plomb , le mercure et le cadmium.

3. Procédé de traitement selon l'une quelconque des revendications 1 ou 2 **caractérisé en ce qu'**il comprend en outre après l'étape g), au moins une étape d'élution des résines pour récupérer lesdits métaux lourds adsorbés et au moins une étape de régénération desdites résines.

4. Procédé de traitement selon l'une quelconque des revendications 1 à 3 **caractérisé en ce qu'**il est contrôlé par un outil de suivi en ligne et en continu de la fuite de métaux sur l'étage résine échangeuse d'ions, ce qui permet de connaître l'état de saturation de la résine et de déclencher si nécessaire la régénération des résines.

5. Procédé de traitement selon l'une quelconque des revendications 1 à 4 **caractérisé en ce que** la fuite de métaux sur l'étage résine échangeuse d'ions fait l'objet d'un calcul prédictif permettant de connaître la durée du cycle restant avant une nouvelle régénération.

6. Procédé selon l'une quelconque des revendications précédentes, **caractérisé en ce que** l'agent coagulant est un cation trivalent.

7. Procédé selon la revendication 6, **caractérisé en ce que** l'agent coagulant est un sel de fer ou un sel d'aluminium.

8. Procédé selon l'une quelconque des revendications 1 à 7, **caractérisé en ce que** l'étape b) est réalisée séparément de l'étape a).

9. Procédé selon l'une quelconque des revendications 1 à7, **caractérisé en ce que** l'étape b) est réalisée simultanément à l'étape a).

10. Procédé selon l'une quelconque des revendications précédentes, **caractérisé en ce que** le liquide obtenu lors de l'étape g) est rejeté dans le milieu naturel ou dans un réseau d'assainissement.

## Patentansprüche

1. Verfahren zur Behandlung von Schwermetallen, die in mit Metallen belasteten flüssigen Abwässern, vor allem in mit Salzen belasteten Wässern vorhanden sind, wobei das Verfahren die folgenden Schritte umfasst:
a. Behandeln des flüssigen Abwassers, das Schwermetalle enthalten könnte, mit einem Neutralisierungsmittel, ausgewählt aus der Gruppe, die insbesondere Soda, Kalkmilch, Magnesiamilch mit einem pH-Wert von 5 bis 6 umfasst,
b. Koagulieren des im Schritt a) behandelten Abwassers durch Beigabe eines Koagulationsmittels,
c. Optional Ausfällen des im Schritt b) erhaltenen Gemisches durch ein Neutralisierungsmittel, ausgewählt aus der Gruppe, die insbesondere Soda, Kalkmilch, Magnesiamilch mit einem pH-Wert von 9 bis 10 umfasst,
d. Ausflocken, durch Beigabe eines Flockungsmittels, des im Schritt b) zum Koagulieren erhaltenen Gemisches oder des beim Schritt c) zur Behandlung mit einem Neutralisierungsmittel erhaltenen Gemisches,
e. Eliminieren der im Schritt d) gebildeten Flocken und Wiedergewinnen der Flüssigkeit,
f. Behandeln der im Schritt e) verbliebenen Schwebstoffe durch Filterung,
g. Kontaktanbahnung zwischen der im Schritt f) wiedergewonnenen Flüssigkeit mit einem Ionentauschharz, das imstande ist, ein oder mehrere Schwermetalle zu absorbieren, oder Kontaktanbahnungen nacheinander mit mehreren Ionentauschharzen, wobei jedes Harz imstande ist, ein oder mehrere Schwermetalle zu absorbieren, um die Konzentration an Schwermetallen, die in der Flüssigkeit vorhanden sind, zu verringern,
h. Wiedergewinnen der im Schritt g) erhaltenen Flüssigkeit, wobei die Konzentration eines jeden der Schwermetalle am Ende des Verfahrens in der im Schritt g) erhaltenen Flüssigkeit geringer als 0,01 mg/l ist.

2. Verfahren zur Behandlung nach Anspruch 1, **dadurch gekennzeichnet, dass** die Schwermetalle aus der Gruppe ausgewählt sind, die Zink, Nickel, Chrom, Kupfer, Thallium, Arsen, Blei, Quecksilber und Cadmium umfasst.

3. Verfahren zur Behandlung nach einem der Ansprüche 1 oder 2, **dadurch gekennzeichnet, dass** es weiter nach dem Schritt g) mindestens einen Schritt zum Eluieren der Harze zur Wiedergewinnung der absorbierten Schwermetalle und mindestens einen Schritt zum Regenerieren der Harze umfasst.

4. Verfahren zur Behandlung nach einem der Ansprüche 1 bis 3, **dadurch gekennzeichnet, dass** es durch ein Überwachungstool online und kontinuierlich in Bezug auf das Auslaufen von Metallen auf die Ionentauschharz-Ebene kontrolliert wird, wodurch es möglich ist, den Sättigungszustand des Harzes zu kennen, und wenn nötig die Regenerierung der Harze auszulösen.

5. Verfahren zur Behandlung nach einem der Ansprüche 1 bis 4, **dadurch gekennzeichnet, dass** das Auslaufen von Metallen auf die Ionentauschharz-Ebene Gegenstand einer prädiktiven Berechnung ist, die es ermöglicht, die Dauer des verbleibenden Zyklus vor einer erneuten Regenerierung zu kennen.

6. Verfahren nach einem der vorstehenden Ansprüche, **dadurch gekennzeichnet, dass** das Koagulationsmittel ein dreiwertiges Kation ist.

7. Verfahren nach Anspruch 6, **dadurch gekennzeichnet, dass** das Koagulationsmittel ein Eisensalz oder ein Aluminiumsalz ist.

8. Verfahren nach einem der Ansprüche 1 bis 7, **dadurch gekennzeichnet, dass** der Schritt b) getrennt von Schritt a) ausgeführt wird.

9. Verfahren nach einem der Ansprüche 1 bis 7, **dadurch gekennzeichnet, dass** der Schritt b) zugleich mit Schritt a) ausgeführt wird.

10. Verfahren nach einem der vorstehenden Ansprüche, **dadurch gekennzeichnet, dass** die im Schritt g) erhaltene Flüssigkeit in die natürliche Umgebung oder in ein Kanalisationsnetz abgegeben wird.

## Claims

1. Method for treating heavy metals present in liquid effluents charged with metals, particularly water charged with salts, said method comprising the following steps:
a. treating the liquid effluent capable of containing heavy metals with a neutralising agent chosen in the group comprising particularly sodium hydroxide, milk of lime, milk of magnesia, at a pH of 5 to 6,
b. coagulating the effluent treated in step a) by adding a coagulant,
c. optionally, precipitating the mixture obtained in step b) with a neutralising agent chosen in the group comprising particularly sodium hydroxide, milk of lime, milk of magnesia, at a pH of 9 to 10,
d. flocculating, by adding a flocculent, the mixture obtained during the coagulation step b) or the mixture obtained during the treatment step with a neutralising agent c),
e. removing the flocs formed in step d) and retrieving the liquid,
f. treating the residual suspended solids in step e) by filtration,
g. contacting the liquid retrieved in step f) with an ion-exchange resin capable of adsorbing one or more heavy metals or successive contacting with several ion-exchange resins, each resin being capable of adsorbing one or more heavy metals, in order to reduce the concentration of heavy metals present in said liquid,
h. retrieving the liquid obtained during step g), the concentration of each of the heavy metals at the end of the method in the liquid obtained during step g) being less than 0.01 mg/l.

2. Treatment method according to claim 1, **characterised in that** the heavy metals are chosen in the group comprising zinc, nickel, chromium, copper, thallium, arsenic, lead, mercury and cadmium.

3. Treatment method according to any one of claims 1 or 2 **characterised in that** it furthermore comprises after step g), at least one step of eluting the resins to retrieve said adsorbed heavy metals and at least one step of regenerating said resins.

4. Treatment method according to any one of claims 1 to 3 **characterised in that** it is monitored by a tool for online and continuous tracking of the leakage of metals on the ion-exchange resin stage, which makes it possible to determine the saturation status of the resin and activate resin regeneration if required.

5. Treatment method according to any one of claims 1 to 4 **characterised in that** the leakage of metals on the ion-exchange resin stage is the subject of a predictive calculation for determining the remaining cycle time before another regeneration.

6. Method according to any one of the preceding claims, **characterised in that** the coagulant agent is a trivalent cation.

7. Method according to claim 6, **characterised in that** the coagulant agent is an iron salt or an aluminium salt.

8. Method according to any one of claims 1 to 7, **characterised in that** step b) is carried out separately from step a).

9. Method according to any one of claims 1 to 7, **characterised in that** step b) is carried out simultaneously with step a).

10. Method according to any one of the preceding claims, **characterised in that** the liquid obtained during step g) is discharged into the environment or into a sewerage system.
